(19) Europäisches Patentamt
European Patent Office
Office européen des brevets

(11) EP 4 134 387 A1

(12) EUROPEAN PATENT APPLICATION

(43) Date of publication:
**15.02.2023 Bulletin 2023/07**

(21) Application number: **21190845.4**

(22) Date of filing: **11.08.2021**

(51) International Patent Classification (IPC):
***C08G 18/76*** *(1974.07)* ***C08G 18/48*** *(1974.07)*
***C08G 18/32*** *(1974.07)* ***C08G 18/66*** *(1974.07)*
***C08F 290/06*** *(1995.01)* ***C08G 18/22*** *(1974.07)*

(52) Cooperative Patent Classification (CPC):
(C-Sets available)
**C08G 18/7671; C08F 290/067; C08G 18/222; C08G 18/3206; C08G 18/4829; C08G 18/6611**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **Sun, Guobin**
**Pudong, Shanghai, 200135 (CN)**
- **Gu, Yongming**
**Pudong New District, Shanghai, 201208 (CN)**
- **Li, Yi Qing**
**Sijing village Songjiang District, Shanghai, 201601 (CN)**
- **Li, Zhijiang**
**Pudong District, Shanghai, 201318 (CN)**
- **Zhang, Hui**
**Zhujing Town, Jinshan District, Shanghai, 201599 (CN)**

(74) Representative: **Levpat**
**c/o Covestro AG**
**Gebäude K12**
**51365 Leverkusen (DE)**

# (54) POLYOL COMPOSITION

(57) The present invention relates to a polyol composition, a polyurethane reaction system comprising the polyol composition, and use thereof in the preparation of polyurethane composites.



Processed by Luminess, 75001 PARIS (FR)

(Cont. next page)

(52) Cooperative Patent Classification (CPC): (Cont.)

C-Sets
**C08F 290/067, C08F 220/20**

## Description

### Technical Field

The present invention relates to a polyol composition, a polyurethane reaction system comprising the polyol composition, and use thereof in the preparation of polyurethane composites.

### Background Technology

The polyol composition in a polyurethane reaction system is very important, and different polyol compositions may bring different physical properties and reaction products. Particularly when used for outdoor parts such as those for fan blades, ships and the like, it is important whether the polyol composition can satisfy physical properties required for producing a polyurethane product having a higher quality.

CN110041504A discloses a polyurethane-modified acrylate polymer with high branching degree and a resin composition prepared therefrom. The polyurethane modified acrylate polymer is prepared by adding dropwise an isocyanate in the presence of a polyol and a hydroxyl-containing acrylate to perform the polymerization and the end-capping simultaneously to obtain a prepolymer, and then performing the graft polymerization on the prepolymer and a branching agent.

CN104311783B discloses an unsaturated hyperbranched polyurethane prepolymer, and a preparation process and use thereof, wherein hydroxyl-terminated small molecular polyol and diisocyanate are mixed and heated to 80°C to perform the reaction for 2-4 hours; after the reaction is finished, the temperature is reduced to 40°C, and a capping agent is added, the temperature is increased to 80°C to proceed the reaction for 3-5 hours, the temperature is reduced to 50°C to perform the discharging, thus the unsaturated hyperbranched polyurethane prepolymer is obtained.

CN107698737A discloses a trifunctional polyurethane acrylate containing siloxane chain segments and a preparation process thereof, and it relates to a polyurethane acrylate and a preparation process thereof.

Despite the above disclosures, there is still a great need in the art for more suitable polyol compositions to meet the various needs.

### Summary of the Invention

One aspect of the present invention is to provide a polyol composition, comprising:

b1) at least one organic polyol;

b2) at least one compound having the structure of formula (I)

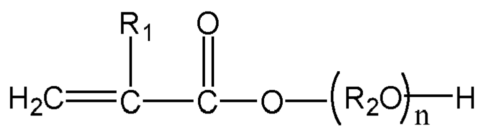

I

,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) a small molecule chain extender having a functionality of≥2, preferably ≥3, and a hydroxyl value of ≥1200 mgKOH/g, preferably ≥1250 mgKOH/g (Test Method ISO 14900-2017).

Preferably, said b1) component is selected from one or more organic polyols having the functionality of 1.7-6, and the hydroxyl value of 150-1100 mgKOH/g (Test Method ISO 14900-2017).

Preferably, the component b2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, said b3) component is selected from glycerol, ethylene glycol, propylene glycol, butylene glycol, trimethylolpropane, pentaerythritol or a combination thereof, preferably glycerol.

Preferably, the content of said b3) component is 2-38 wt%, preferably 3-36 wt%, based on the total weight of

the polyol composition.

Another aspect of the present invention is to provide a polyurethane reaction system, comprising:

Component A), comprising: at least one polyisocyanate;
Component B), comprising:

b1) at least one organic polyol;

b2) at least one compound having the structure of formula (I)

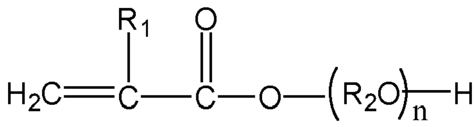

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) a small molecule chain extender having a functionality of≥2, preferably ≥3, and a hydroxyl value of ≥1200 mgKOH/g, preferably ≥1250 mgKOH/g (Test Method ISO 14900-2017);

Component C), a free radical reaction initiator.

Preferably, said b1) component is selected from one or more organic polyols having the functionality of 1.7-6, and the hydroxyl value of 150-1100 mgKOH/g (Test Method ISO 14900-2017).

Preferably, the content of said b1) component is 9-60 wt%, preferably 10-60 wt%, based on the total weight of the polyurethane reaction system.

Preferably, the component b2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the content of said b2) component is 3-34 wt%, preferably 5-33 wt%, based on the total weight of the polyurethane reaction system.

Preferably, said b3) component is selected from glycerol, ethylene glycol, propylene glycol, butylene glycol, trimethylolpropane, pentaerythritol or a combination thereof, preferably glycerol.

Preferably, the content of said b3) component is 2-38 wt%, preferably 3-36 wt%, based on the total weight of the component B.

Preferably, the content of said b3) component is 1-11 wt%, preferably 1.2-10 wt%, more preferably 2-8.5 wt%, based on the total weight of the polyurethane reaction system.

Preferably, the polyurethane resin obtained from the reaction of the polyurethane reaction system has a heat deflection temperature of ≥105°C, preferably ≥110°C, more preferably ≥120°C (Test Method ISO 75-2 2013).

Preferably, compared to the heat deflection temperature of the polyurethane resin obtained from the reaction of the polyurethane reaction system without component b3), the heat deflection temperature of the polyurethane resin obtained from the reaction of the polyurethane reaction system with component b3) is increased by ≥5%, preferably ≥10%, more preferably ≥15% (Test Method ISO 75-2 2013).

A further aspect of the present invention is to provide a polyurethane resin, which is prepared by the reaction of the aforementioned polyurethane reaction system according to the present invention.

Preferably, said polyurethane resin has a heat deflection temperature of ≥105°C, preferably ≥110°C, more preferably ≥120°C (Test Method ISO 75-2 2013).

Preferably, compared to the heat deflection temperature of the polyurethane resin obtained from the reaction of the polyurethane reaction system without component b3), the heat deflection temperature of the polyurethane resin obtained from the reaction of the polyurethane reaction system with component b3) is increased by ≥5%, preferably ≥10%, more preferably ≥15% (Test Method ISO 75-2 2013).

A further aspect of the present invention is to provide use of the polyurethane reaction system of the present invention in manufacture of fan blades.

Said reaction system comprises:

Component A), comprising: at least one polyisocyanate;

Component B), comprising:

b1) at least one orgainc polyol;

b2) at least one compound having the structure of formula (I)

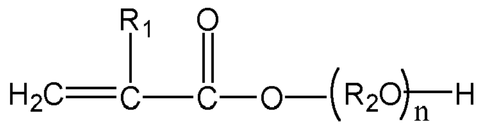

I

,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) a small molecule chain extender having a functionality of≥2, preferably ≥3, and a hydroxyl value of ≥1200 mgKOH/g, preferably ≥1250 mgKOH/g (Test Method ISO 14900-2017);

Component C), a free radical reaction initiator.

Preferably, said b3) component is selected from glycerol, ethylene glycol, propylene glycol, butylene glycol, trimethylolpropane, pentaerythritol or a combination thereof, preferably glycerol.

Preferably, the content of said b3) component is 1-11 wt%, preferably 1.2-10 wt%, more preferably 2-8.5 wt%, based on the total weight of the polyurethane reaction system.

Preferably, the polyurethane resin obtained from the reaction of the polyurethane reaction system has a heat deflection temperature of ≥105°C, preferably ≥110°C, more preferably ≥120°C (Test Method ISO 75-2 2013).

Preferably, compared to the heat deflection temperature of the polyurethane resin obtained from the reaction of the polyurethane reaction system without component b3), the heat deflection temperature of the polyurethane resin obtained from the reaction of the polyurethane reaction system with component b3) is increased by ≥5%, preferably ≥10%, more preferably ≥15% (Test Method ISO 75-2 2013).

A further aspect of the present invention is to provide a process for preparing a polyurethane composite, which is to prepare the polyurethane composite by mixing the following components:

The aforementioned polyurethane reaction system according to the present invention; and,
At least one reinforcing material.

Preferably, the polyurethane composite is prepared through the pultrusion process, the winding molding process, the hand lay-up molding process, the vacuum perfusion process, the spray molding process or a combination thereof.

Preferably, the reinforcing material of the present invention refers to a material including glass fiber, carbon nanotube, carbon fiber, polyester fiber, natural fiber, aromatic polyamide fiber, nylon fiber, basalt fiber, boron fiber, silicon carbide fibre, asbestos fiber, crystal whisker, hard particles, metal fibre or a combination thereof.

Preferably, the process comprises the coexistence of the free radical polymerization reaction and the addition polymerization reaction between isocyanate groups and hydroxyl groups.

Preferably, the polyurethane resin prepared from the polyurethane reaction system has a heat deflection temperature of ≥105°C, preferably ≥110°C, more preferably ≥120°C.

Preferably, compared to the heat deflection temperature of the polyurethane resin obtained from the reaction of the polyurethane reaction system without component b3), the heat deflection temperature of the polyurethane resin obtained from the reaction of the polyurethane reaction system with component b3) is increased by ≥5%, preferably ≥10%, more preferably ≥15%.

In a further aspect of the present invention, there is provided a polyurethane composite prepared by the aforementioned method for preparing a polyurethane composite according to the present invention.

Preferably, the content of the reinforcing material in the polyurethane composite is ≥40wt%, preferably ≥45wt%, more preferably 50-88wt%, based on the total weight of the polyurethane composite.

A further aspect of the present invention is to provide a polyurethane product. The polyurethane product comprises the aforementioned polyurethane resin according to the present invention, and be selected from cable trays, frames of doors, windows and curtain walls, frames of ladders, tent poles or pipes, anti-glare shields, floors, sucker rods, telegraph poles and cross arms, guardrails, grills, architectural sectional materials, container sectional materials and plates, bike racks, fishing rods, cable cores, insulator core rods, antenna housings, single-layer or sandwiched continuous plates, fan blades and parts thereof, enclosures for wind-driven generators, ship blades, ship shells, internal and external decorations and shells of vehicles, radar housings, structural part materials of mechanical equipment, decorations and structural parts of buildings and bridges, preferably fan blades or parts thereof, enclosures for wind-driven generators, more preferably blade shells, web, spar caps, main spars, auxiliary spars and blade roots of fan blades.

Surprisingly, we have found that the polyol composition of the present invention, which comprises a selected small molecule chain extender, a polyol compatible thereto and a compound having the structure of formula (I), can greatly increase the heat deflection temperature of the resin obtained therefrom, thereby enabling the resin to be suitable for a wider variety of applications, such as large articles for outdoor use, e.g., fan blades, ship components, and the like. The obtained relevant products have better quality, and meanwhile are more temperature-resistant and wear-resistant, and have an extended service life. In addition, the maintenance and replacement can be reduced, thereby saving raw materials, manpower and material resources and being more environment-friendly.

Furthermore, small molecule chain extenders, including glycerol, generally have an obvious price advantage over polyols. Therefore, the polyol composition of the present invention can greatly save costs and increase economic benefits while improving product quality, thereby promoting the popularization and application of related products.

**Detailed description**

I. Polyol Composition

The polyol composition provided by the present invention comprises:

b1) at least one organic polyol;

b2) at least one compound having the structure of formula (I)

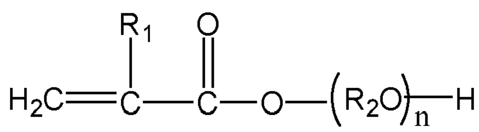

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) a small molecule chain extender having a functionality of ≥2, preferably ≥3, and a hydroxyl value of ≥1200 mgKOH/g, preferably ≥1250 mgKOH/g (Test Method ISO 14900-2017).

II. Polyurethane Reaction System

The polyurethane reaction system of the present invention comprises:

Component A), comprising: at least one polyisocyanate;

Component B), comprising:

b1) at least one organic polyol;

b2) at least one compound having the structure of formula (I)

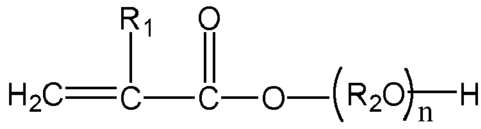

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) a small molecule chain extender having a functionality of≥2, preferably ≥3, and a hydroxyl value of ≥1200 mgKOH/g, preferably ≥1250 mgKOH/g (Test Method ISO 14900-2017);

Component C), a free radical reaction initiator.

In embodiments of the present invention, the organic polyisocyanate may be any aliphatic, cycloaliphatic, or aromatic isocyanate known to be used in the preparation of polyurethanes. Its example includes, but is not limited to: toluene diisocyanate (TDI), diphenylmethane diisocyanate (MDI), polyphenylmethane polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethyldimethylene diisocyanate (TMXDI) and their polymers or a combination thereof. The functionality of the isocyanate that can be used in the present invention is preferably 2.0-3.5, particularly preferably 2.1-2.9.
The viscosity of the isocyanate is preferably 5-700 mPa*S, particularly preferably 10-300 mPa*S, measured at 25°C according to DIN 53019-1-3.
When used in the present invention, the organic polyisocyanate comprises an isocyanate dimer, an isocyanate trimer, an isocyanate tetramer, an isocyanate pentamer, or a combination thereof.
In a preferred embodiment of the present invention, the isocyanate component a) is selected from diphenylmethane diisocyanate (MDI), polyphenylmethane polyisocyanate (pMDI), and their polymers, prepolymers or a combination thereof.
Preferably, the NCO content of the organic polyisocyanate of the present invention is 20-33 wt%, preferably 25-32 wt%, particularly preferably 30-32 wt%. The NCO content is determined by GB/T12009.4-2016.
The NCO content of the polyisocyanate prepolymer of the present invention is 20-33 wt%, preferably 25-32 wt%. The NCO content is determined by GB/T12009.4-2016.
Preferably, the polyisocyanate content of the present invention is ≥53 wt%, preferably ≥55 wt%, more preferably 55-70 wt%, based on the total weight of the polyurethane reaction system.
The terminated-isocyanate may be also used as isocyanate component a), which may be prepared from the reaction of an excessive amount of an organic polyisocyanate or an organic polyisocyanate mixture with a polyol compound. Those of ordinary skill in the art are familiar with these compounds and their preparation methods.
In embodiments of the present invention, the isocyanate-reactive component contains one or more organic polyols b1). The content of the organic polyol is 9-60 wt%, based on 100 wt% of the total weight of the polyurethane reaction system. The organic polyol may be an organic polyol conventionally used in the art for preparing a polyurethane, and comprises, but is not limited to: polyether polyol, polyethercarbonate polyol, polyester polyol, polycarbonate diol, polymer polyol, vegetable oil-based polyol, or a combination thereof.
The polyether polyol can be prepared by known processes, for example, obtained by reacting an olefin oxide with a starter in the presence of a catalyst. The catalyst is preferably, but not limited to, an alkaline hydroxide, an alkaline alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, polyhydroxyl compounds or polyamine compounds, the polyhydroxyl compound is preferably, but not limited to, water, ethylene glycol, 1,2-propylene glycol, 1,3-propylene glycol, diethylene glycol, trimethylolpropane, glycerol, bisphenol A, bisphenol S or a mixture thereof, and the polyamine compound is preferably, but not limited to, ethylene diamine, propylene diamine, butylene diamine, hexamethylene diamine, diethylene triamine, toluylene diamine or a mixture thereof.
The polyethercarbonate polyol may also be used in the present invention. The polyethercarbonate polyol can be prepared by adding carbon dioxide and alkylene oxide on an active hydrogen-containing starter by means of a double metal cyanide catalyst.

Said polyester polyol is prepared by reacting dicarboxylic acid or dicarboxylic anhydride with polyol. The dicarboxylic acid is preferably, but not limited to, an aliphatic carboxylic acid having 2-12 carbon atoms, and the aliphatic carboxylic acid having 2-12 carbon atoms is preferably, but not limited to, succinic acid, malonic acid, glutaric acid, adipic acid, suberic acid, azelaic acid, sebacic acid, lauryl acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol that is reacted with dicarboxylic acid or dicarboxylic anhydride is preferably, but not limited to ethylene glycol, diethylene glycol, 1,2-propylene glycol, 1,3-propylene glycol, dipropylene glycol, 1,3-methylpropylene glycol, 1,4-butylene glycol, 1,5-pentylene glycol, 1,6-hexylene glycol, neopentyl glycol, 1,10-decanediol, glycerol, trimethylolpropane, or a mixture thereof. The polyester polyol also comprises a polyester polyol prepared from lactone. The polyester polyol prepared from lactone is preferably, but not limited to ε-caprolactone. Preferably, the polyester polyol has a molecular weight of 200-3000 and a functionality of 2-6, preferably 2-4, and more preferably 2-3.

The polycarbonate diol can be prepared by reacting a diol with a dihydrocarbyl carbonate or a diaryl carbonate or phosgene. The diol is preferably, but not limited to, 1,2-propylene glycol, 1,3-propylene glycol, 1,4-butylene glycol, 1,5-pentylene glycol, 1,6-hexylene glycol, diethylene glycol, trioxymethylene diol, or a mixture thereof. The dihydrocarbyl carbonate or the diaryl carbonate is preferably, but not limited to, diphenyl carbonate.

When used in the present invention, the vegetable oil-based polyol includes a vegetable oil, a vegetable oil polyol or a modified product thereof. The vegetable oil is a compound prepared from an unsaturated fatty acid and glycerol, or is an oil and fat extracted from fruits, seeds and germs of plants, and is preferably, but not limited to, peanut oil, soyabean oil, linseed oil, castor oil, rapeseed oil, and palm oil. The vegetable oil polyol is a polyol initiated from one or more vegetable oils. The starter for synthesizing the vegetable oil polyol includes, but is not limited to, soybean oil, palm oil, peanut oil, low erucic acid rapesed oil, and castor oil. A hydroxyl group can be introduced into the starter of the vegetable oil polyol through the process such as cracking, oxidation, or transesterification, and then the corresponding vegetable oil polyol can be prepared by a process for preparing an organic polyol well known to those skilled in the art.

Those skilled in the art are familiar with the methods for measuring the hydroxyl value, such as those disclosed in Houben Weyl, Methoden der Organischen Chemie, vol. XIV/2 Makromolekulare Stoffe, p.17, Georg Thieme Verlag; Stuttgart 1963. The entire content of the document is incorporated herein by reference.

When used in the present invention, unless otherwise specified, the functionality and the hydroxyl value of the organic polyol refer to the average functionality and the average hydroxyl value.

In embodiments of the present invention, the isocyanate-reactive component further contains one or more compounds b2) having the structure of formula (I)

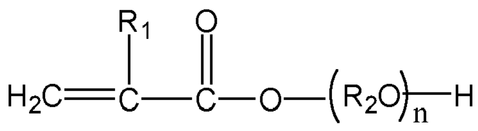

I

,

Wherein, $R_1$ is selected from hydrogen, methyl or ethyl; $R_2$ is selected from an alkylene group having 2-6 carbon atoms; n is an integral number selected from 1-6.

In a preferred embodiment of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-bis(4-phenylene)-propane, 1,4-dimethylenebenzene, 1,3-dimethylenebenzene, 1,2-dimethylenebenzene.

In a preferred embodiment of the present invention, the component b2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) may be prepared by conventional methods in the art, for example may be prepared by the esterification reaction of (meth)acrylic anhydride or (meth)acrylic acid, (meth)acryloyl halide compounds and HO-$(R_2O)_n$-H. Those skilled in the art are familiar with these preparation methods, for example, as explained in "Manual of Polyurethane Raw Materials and Additives" (Liu Yijun, published on 1st April, 2005), Chapter III, and "Polyurethane Elastomer" (Liu Houjun, published in August 2012), Chapter II. The entire contents of these documents are incorporated herein by reference.

The small molecule chain extender of the present invention refers to a small molecule chain extender having a functionality of ≥2, preferably ≥3, and a hydroxyl value of ≥1200 mgKOH/g, preferably ≥1250 mgKOH/g (Test Method

ISO 14900-2017), and can be selected from glycerol, ethylene glycol, propylene glycol, butylene glycol, trimethylolpropane, pentaerythritol or a combination thereof, preferably glycerol. Its content is 2-38 wt%, preferably 3-36 wt%, based on the total weight of the polyol composition. If based on the total weight of the polyurethane reaction system, its content is 1-11 wt%, preferably 1.2-10 wt%, more preferably 2-8.5 wt%.

In embodiments of the present invention, the polyurethane reaction system further contains C) free radical reaction initiator. The free-radical initiator that is used in the present invention may be added to the polyol component or the isocyanate component, or can be added to both components. These initiators include, but are not limited to, peroxide, persulfide, peroxycarbonate, boric acid peroxide, azo compound, or other suitable free radical initiators that can initiate the curing of a double bond-containing compound. An example thereof includes tert-butyl peroxyisopropylcarbonate, tert-butyl peroxy-3,5,5-trimethylhexanoate, methylethyl ketone peroxide, and cumene hydroperoxide.

The content of the free-radical reaction initiator is usually 0.1-8 wt%, based on 100wt% of the total weight of the isocyanate-reactive component. In addition, an accelerator, such as a cobalt compound or an amine compound, may be present.

In embodiments of the present invention, the polyurethane reaction system may also contain a catalyst for catalyzing the reaction of an isocyanate group (NCO) and a hydroxyl group (OH).

An appropriate catalyst for the polyurethane reaction is preferably, but not limited to an amine catalyst, an organometallic catalyst, or a mixture thereof. The amine catalyst is preferably, but not limited to triethylamine, tributylamine, triethylenediamine, N-ethylmorpholine, N,N,N',N'-tetramethyl-ethylene diamine, pentamethyldiethylene-triamine, N,N-methylaniline, N,N-dimethylaniline, or a mixture thereof. The organometallic catalyst is preferably, but not limited to an organotin-tpye compound, for example: tin (II) acetate, tin (II) octoate, tin ethylhexanoate, tin laurate, dibutyltin oxide, dibutyltin dichloride, dibutyltin diacetate, dibutyltin maleate, dioctyltin diacetate, or a mixture thereof. The used amount of the catalyst is 0.001-10 wt%, based on 100wt% of the total weight of the isocyanate-reactive component.

In embodiments of the present invention, the polyurethane reaction, i.e., the addition polymerization reaction between the isocyanate group and the hydroxyl group, wherein the isocyanate group can be an isocyanate group contained in the organic polyisocyanate (component A), or an isocyanate group contained in the intermediate product of the reaction of the organic polyisocyanate (component A) and the organic polyol (b1) component) or b2) component, the hydroxyl group can be a hydroxyl group contained in the organic polyol (b1) component) or b2) component, or a hydroxyl group contained in the intermediate product of the reaction of the organic polyisocyanate (component A) and the organic polyol (b1) component) or b2) component.

In embodiments of the present invention, the free-radical polymerization reaction is an addition polymerization reaction of olefinic bonds, wherein the olefinic bonds may be an olefinic bond contained in b2) component or an olefinic bond contained in the intermediate product of the reaction of b2) component and the organic polyisocyanate.

In embodiments of the present invention, the polyurethane addition polymerization reaction (i.e., the addition polymerization reaction between the isocyanate group and the hydroxyl group) and the free radical polymerization reaction coexist. As known to those skilled in the art, suitable reaction conditions can be selected to allow the polyurethane addition polymerization reaction and the free radical polymerization reaction to proceed successively, but the polyurethane matrix prepared in this way is structurally different from the polyurethane resin matrix prepared by allowing the polyurethane addition polymerization reaction and the free radical polymerization reaction to proceed simultaneously, so that the prepared polyurethane composites are different in mechanical properties and manufacturability.

In embodiments of the present invention, the above-mentioned polyurethane reaction system can also contain auxiliaries or additives comprising, but not limited to: filler, internal release agent, flame retardant, smoke suppressant, dye, pigment, antistatic agent, antioxidant, UV stabilizer, diluent, defoamer, coupling agent, surface wetting agent, leveling agent, water-removing agent, catalyst, molecular sieve, thixotropic agent, plasticizer, foaming agent, foam stabilizing agent, foam stabilizer, free radical reaction suppressant or a combination thereof, and these component may be optionally contained in the isocyanate component A) and/or the isocyanate-reactive component B). These components can also be independently stored as component D) and, when used for preparing a polyurethane composite, are mixed with the isocyanate component A) and/or the isocyanate-reactive component B) before the preparation.

In some embodiments of the present invention, the filler is selected from: aluminum hydroxide, bentonite, pulverized fuel ash, wollastonite, perlite powder, hollow microsphere, calcium carbonate, talcum powder, mica powder, porcelain clay, fumed silica, expandable microsphere, diatomite, volcanic ash, barium sulfate, calcium sulfate, glass microsphere, stone powder, wood flour, wood chip, bamboo powder, bamboo chip, rice grain, straw chips, sorghum straw chips, graphite powder, metal powder, thermosetting composite recycled powder, plastic particle or powder, or a combination thereof. Among others, the glass microspheres can be solid or hollow.

The internal release agent that can be used in the present invention comprises any release agent conventionally used for producing polyurethanes, and examples thereof include long-chain carboxylic acids, particularly fatty acids such as stearic acid, amines of long-chain carboxylic acids such as stearic amide, fatty acid esters, metal salts of long-chain carboxylic acids such as zinc stearate, or polysiloxanes.

Examples of flame retardants that can be used in the present invention include triaryl phosphates, trialkyl phosphates, triaryl phosphates or trialkyl phosphates with halogen, melamine, melamine resins, halogenated paraffins, red phosphorus, or combinations thereof.

Other auxiliaries that can be used in the present invention include water-scavengers such as molecular sieves; defoamers such as polydimethyl siloxane; coupling agents such as mono(ethylene oxide) or organic amine functionalized trialkoxysilane or combinations thereof. Coupling agents are particularly preferably for improving the adhesion of the resin matrix to the fiber-reinforced material. Fine particle fillers, such as clay and fumed silica, are commonly used as thixotropic agent.

The free radical reaction suppressant that can be used in the present invention comprises a polymerization inhibitor and a polymerization retarder, and the like, for example, some phenols, quinone compounds or hindered amine compounds. Examples thereof include methyl hydroquinone, p-methoxyphenol, benzoquinone, polymethyl pyridine derivatives, low-valent copper ions, and the like.

III. Preparation of Polyurethane Composite

Another aspect of the present invention is to provide a process for preparing a polyurethane composite, wherein the polyurethane composite contains a polyurethane resin matrix and a reinforcing material, the process comprises a step of preparing the polyurethane resin matrix under such a reaction condition that the polyurethane reaction system is subjected to the free radical polymerization reaction and the reaction between the isocyanate group and the hydroxyl group simultaneously, wherein the polyurethane reaction system is described above.

In embodiments of the present invention, the polyurethane addition polymerization reaction (i.e., the addition polymerization reaction between the isocyanate group and the hydroxyl group) and the free radical polymerization reaction coexist.

The polyurethane composite of the present invention can be prepared by a polyurethane vacuum perfusion process. The operation procedure for the polyurethane vacuum perfusion process is well known to those skilled in the art, and for example, is described in the patent application CN1954995A, the entire content of which is incorporated herein by reference.

In the vacuum perfusion process, one or more core materials are provided in a mould, and the core material is optionally covered wholly or partly by a reinforcing material. Then, a negative pressure is formed in the mould to perfuse the polyurethane resin into the mould; before curing, the polyurethane resin will wholly soak the reinforcing material and the core material will be wholly or partly soaked by the polyurethane resin. Then, under appropriate conditions, the polyurethane resin is allowed to simultaneously undergo the polyurethane addition polymerization reaction and the free-radical polymerization reaction, thereby curing the polyurethane resin to form a polyurethane resin matrix. In the above vacuum perfusion process, the mould may be a mould commonly used in the art, and a person skilled in the art may select a suitable mould according to the desired properties and dimensions of the final product. In case of preparing a large article by using the vacuum perfusion process, in order to ensure a sufficient pot-life, it is necessary to have the resin to keep a sufficiently low viscosity during the perfusion to maintain good flowability. If the viscosity is higher than 600mPas, the resin viscosity is considered as being too high, the flowability becomes worse, and the resin is no longer suitable for the vacuum perfusion process.

The core material is used together with the polyurethane resin matrix and the reinforcing material so as to facilitate the molding of the composite material and the reduction of the weight of the composite material. The core materials commonly used in the art can be used in the polyurethane composite of the present invention, and their examples include, but not limited to polystyrene foams, for example COMPAXX® foam; polyester PET foams; polyimide PMI foams; polyvinyl chloride foams; metal foams, such as those available from Mitsubishi; balsa wood; and the like.

Preferably, the polyurethane reaction system of the present invention is suitable for being used in the polyurethane vacuum perfusion process to prepare the polyurethane composite, and has a relatively long pot-life, and the polyurethane composite prepared by the polyurethane vacuum perfusion process has good mechanical properties, especially a relatively high heat-deflection temperature, so that the problem that the pot-life of the polyurethane reaction system and the heat-deflection temperature of the prepared polyurethane composite cannot be improved at the same time in the prior art is solved. These polyurethane composites can be used in the production of blades of wind-driven generators, enclosures for wind-driven generators, ship blades, ship shells, internal and external decorations and shells of vehicles, radar housings, structural part materials of mechanical equipment, and decorations and structural parts of buildings and bridges. The fan as mentioned in the present invention comprises a wind-driven generator, a turbo fan and the like.

The polyurethane composite of the present invention can also be prepared through the pultrusion process, the winding molding process, the hand lay-up molding process, the spray molding process or a combination thereof; and the detailed description of these processes can be found with reference to "Composite Material Technology and Apparatus" (Liu Xiongya et al., 1994, Wuhan University of Technology Press), chapters 2 and 6-9. The entire contents of the

above disclosure are incorporated herein by reference.

The present invention will be further described with reference to the specific examples. It is to be understood, however, that these examples are illustrative only and are not to be construed to limit the scope of the present invention.

## Examples

The test methods for which no specific conditions are indicated in the following examples are generally based on conventional conditions or according to conditions recommended by the manufacturer. Unless otherwise stated, all percentages and parts are by weight.

Pbw, refers to the parts by weight of each component in the polyurethane reaction system;

Functionality, refers to the value determined according to the industry formula: functionality=hydroxyl value * molecular weight/56100; wherein the molecular weight is determined by the GPC high performance liquid chromatography;

The heat deflection temperature (HDT), refers to the temperature at which a plastic material can maintain a constant shape at high temperature and under pressure. It is generally used to determine the short-term heat resistance of the plastic. The heat deflection temperature of the present invention is measured according to ISO 75-2 2013.

Isocyanate index, refers to a value calculated by the following formula:

Isocyanate index (%) = (mole number of isocyanate group (NCO) group in component A/mole number of isocyanate group-reactive group in component B)×100%.

The raw materials used in the examples are as follows:

Isocyanate Desmodur 1511L: NCO%: 30.5-32.5%, viscosity at 25°C: 160-240 mP.s, purchased from Covestro Polymers (China) Co., Ltd.;

t-butyl peroxybenzoate (TBPB): purchased from AkzoNobel;

NL-49P: purchased from AkzoNobel;

Polyol: propylene oxide-based polyether polyol, initiator component = glycerol, f = 3, hydroxyl value 470, purchased from Covestro Polymers (China) Co., Ltd.;

Hydroxypropyl methacrylate (HPMA): purchased from Hersbit Chemical;

Glycerol: purchased from Aladdin.

Examples E1-6 and Comparative Examples CI-2

Preparation of a white material (component B): According to the component proportions in Table 1, the polyol, glycerol, HPMA, NL-49P and the like were weighed, and quickly stirred for 30 seconds (rotation speed per minute: 3000rpm); the white material was allowed to stand by for 1 day, and observed for whether it was uniform and transparent or it laminated.

Preparation of a black material (component A): According to the component proportions in Table 1, TBPB and 1511L were weighed, successively added to another plastic cup, stirred to become uniform.

The black and white materials were weighed according to the proportion of each component in Table 1, placed in a new plastic cup, rapidly stirred for 30 seconds (3000 rpm), and then placed in a flat-plate mould which had been preheated to 80°C in an oven. Then the oven door was closed, the temperature in the oven was quickly increased by heating to 170°C within 15 minutes, and then preserved at 170°C for 15 minutes. The heating of the oven was stopped, and the cured resin plate was naturally cooled to room temperature. The oven was opened, and the resin plate was taken out and measured for its corresponding heat deflection temperature. The test results were shown in Table 1.

Table 1: Test results of Examples E1-6 and Comparative Examples C1-2 (unit: pbw for parts by weight)

| White material | C1 | E1 | E2 | E3 | E4 | E5 | E6 | C2 |
|---|---|---|---|---|---|---|---|---|
| HPMA | 20 | 20 | 20 | 20 | 30 | 30 | 30 | 30 |
| Glycerol | 0 | 8 | 15 | 20 | 20 | 30 | 35 | 40 |
| Polyol | 80 | 72 | 65 | 60 | 50 | 40 | 35 | 30 |
| NL-49P | 0.45 | 0.45 | 0.45 | 0.45 | 0.45 | 0.45 | 0.45 | 0.45 |
| Lamination of white material | Uniform, no lamination | Uniform, no lamination | Uniform, no lamination | Uniform, no lamination | Uniform, no lamination | Uniform, no lamination | Uniform, no lamination | Significant lamination |
| | | | | | | | | |
| Black material | | | | | | | | |
| 1511L | 109 | 135 | 157 | 174 | 172 | 204 | 220 | 236 |
| TBPB | 2 | 2.5 | 3 | 3.2 | 3.2 | 3.8 | 4 | 4.3 |
| | | | | | | | | |
| HDT (°C) | 104 | 121 | 137.1 | 142.5 | 143.5 | 143.2 | 151 | 151.1 |

As could be seen from Table 1, compared with Comparative Example C1, Examples E1-6 could significantly increase their heat deflection temperature without changing the amount of HPMA, but only by adding part of glycerol into the white material, and the mutual solubility of the components of the white material was kept well and the white material was clear and transparent without lamination. However, if the addition amount of glycerol was too high, the mutual solubility became poor and the white material laminated. The lamination of the white material could be detrimental to daily operation and use. Moreover, in the comparison between E6 and C2, it could be seen that further increasing the amount of glycerol resulted in not only the worse mutual solubility and the lamination, but also no longer significant increase in the heat deflection temperature.

## Claims

**1.** A polyol composition, comprising:

b1) at least one organic polyol;
b2) at least one compound having the structure of formula (I)

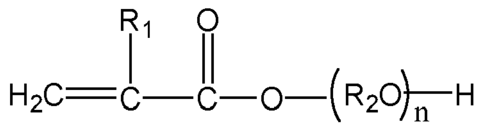

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;
b3) a small molecule chain extender having a functionality of≥2, preferably ≥3, and a hydroxyl value of ≥1200 mgKOH/g, preferably ≥1250 mgKOH/g (Test Method ISO 14900-2017).

**2.** The polyol composition according to claim 1, **characterized in that** said b3) component is selected from glycerol, ethylene glycol, propylene glycol, butylene glycol, trimethylolpropane, pentaerythritol or a combination thereof, preferably glycerol.

**3.** The polyol composition according to claim 1 or 2, **characterized in that** the content of said b3) component is 2-38 wt%, preferably 3-36 wt%, based on the total weight of the polyol composition.

**4.** A polyurethane reaction system, comprising:

Component A), comprising: at least one polyisocyanate;
Component B), comprising:

b1) at least one organic polyol;
b2) at least one compound having the structure of formula (I)

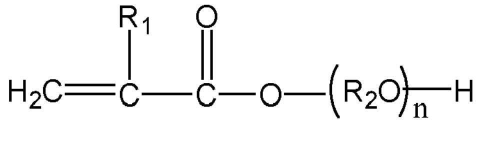

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;
b3) a small molecule chain extender having a functionality of≥2, preferably ≥3, and a hydroxyl value of

≥1200 mgKOH/g, preferably ≥1250 mgKOH/g (Test Method ISO 14900-2017);

Component C), a free radical reaction initiator.

5. The polyurethane reaction system according to claim 4, **characterized in that** said b3) component is selected from glycerol, ethylene glycol, propylene glycol, butylene glycol, trimethylolpropane, pentaerythritol or a combination thereof, preferably glycerol.

6. The polyurethane reaction system according to claim 4 or 5, **characterized in that** the content of said b3) component is 1-11 wt%, preferably 1.2-10 wt%, more preferably 2-8.5 wt%, based on the total weight of the polyurethane reaction system.

7. The polyurethane reaction system according to any of claims 4-6, **characterized in that** the polyurethane resin obtained from the reaction of the polyurethane reaction system has a heat deflection temperature of ≥105°C, preferably ≥110°C, more preferably ≥120°C (Test Method ISO 75-2 2013).

8. The polyurethane reaction system according to any of claims 4-7, **characterized in that** compared to the heat deflection temperature of the polyurethane resin obtained from the reaction of the polyurethane reaction system without component b3), the heat deflection temperature of the polyurethane resin obtained from the reaction of the polyurethane reaction system with component b3) is increased by ≥5%, preferably ≥10%, more preferably ≥15% (Test Method ISO 75-2 2013).

9. A polyurethane resin, obtained from the reaction of the polyurethane reaction system according to any of claims 4-8.

10. Use of the polyurethane reaction system according to any of claims 4-8 in manufacture of fan blades.

11. A process for preparing a polyurethane composite, which is to prepare the polyurethane composite by mixing the following components:

    the polyurethane reaction system according to any of claims 4-8; and
    at least one reinforcing material.

12. The process according to claim 12, **characterized in that** the polyurethane composite is prepared through pultrusion process, winding molding process, hand lay-up molding process, vacuum perfusion process, spray molding process or a combination thereof, preferably through vacuum perfusion process and/or pultrusion process.

13. The process according to claim 11 or 12, **characterized in that** the process comprises the coexistence of the free radical polymerization reaction and the addition polymerization reaction between isocyanate groups and hydroxyl groups.

14. A polyurethane composite obtained by the process for preparing a polyurethane composite according to any of claims 11-13.

15. A polyurethane product comprising the polyurethane resin of claim 9, **characterized in that** the polyurethane product is selected from cable trays, frames of doors, windows and curtain walls, frames of ladders, tent poles or pipes, anti-glare shields, floors, sucker rods, telegraph poles and cross arms, guardrails, grills, architectural sectional materials, container sectional materials and plates, bike racks, fishing rods, cable cores, insulator core rods, antenna housings, single-layer or sandwiched continuous plates, fan blades or parts thereof, enclosures for wind-driven generators, ship blades, ship shells, internal and external decorations and shells of vehicles, radar housings, structural part materials of mechanical equipment, decorations and structural parts of buildings and bridges, preferably fan blades or parts thereof, enclosures for wind-driven generators, more preferably blade shells, web, spar caps, main spars, auxiliary spars and blade roots of fan blades.

Europäisches Patentamt
European Patent Office
Office européen des brevets

# EUROPEAN SEARCH REPORT

Application Number
EP 21 19 0845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/166441 A1 (JAPAN U-PICA COMPANY LTD [JP]) 20 August 2020 (2020-08-20)<br>* paragraph [0125] *<br>* paragraph [0108] *<br>* paragraph [0134]; examples C-2; table 1 *<br>* paragraphs [0002], [0215] *<br>* paragraphs [0069], [0071] *<br>* paragraph [0106] *<br>----- | 1-15 | INV.<br>C08G18/76<br>C08G18/48<br>C08G18/32<br>C08G18/66<br>C08F290/06<br>C08G18/22 |
| X<br>A | CN 111 117 554 B (DONGGUAN DEJU ADHESIVE TECH CO LTD) 1 December 2020 (2020-12-01)<br>* paragraph [0034] - paragraph [0038]; example 3 *<br>* paragraph [0002] *<br>----- | 1-10,15<br>11-14 | |
| | | | TECHNICAL FIELDS SEARCHED (IPC) |
| | | | C08G<br>C09J<br>C08F |

1 The present search report has been drawn up for all claims

| Place of search | Date of completion of the search | Examiner |
|---|---|---|
| Munich | 12 January 2022 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 19 0845

This annex lists the patent family members relating to the patent documents cited in the above-mentioned European search report. The members are as contained in the European Patent Office EDP file on
The European Patent Office is in no way liable for these particulars which are merely given for the purpose of information.

12-01-2022

| Patent document cited in search report | Publication date | Patent family member(s) | Publication date |
|---|---|---|---|
| WO 2020166441 A1 | 20-08-2020 | CN 113454139 A | 28-09-2021 |
| | | EP 3925995 A1 | 22-12-2021 |
| | | KR 20210126600 A | 20-10-2021 |
| | | TW 202104344 A | 01-02-2021 |
| | | WO 2020166441 A1 | 20-08-2020 |
| CN 111117554 B | 01-12-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 110041504 A
- CN 104311783 B
- CN 107698737 A
- CN 1954995A


### Non-patent literature cited in the description


- Methoden der Organischen Chemie. **HOUBEN WEYL.** Makromolekulare Stoffe. Georg Thieme Verlag, 1963, vol. XIV-2, 17
- **LIU YIJUN.** Manual of Polyurethane Raw Materials and Additives. 01 April 2005
- **LIU HOUJUN.** Polyurethane Elastomer. August 2012
- **LIU XIONGYA et al.** Composite Material Technology and Apparatus. Wuhan University of Technology Press, 1994